# EUROPEAN PATENT SPECIFICATION

(11) **EP 1 398 181 B1**
(45) Date of publication and mention of the grant of the patent: **21.04.2010**
(21) Application number: 03255614.4
(22) Date of filing: 09.09.2003
(51) Int. Cl.: B60B 27/00, F16C 43/04

(54) **Bearing apparatus for a wheel of a vehicle**
Lagervorrichtung für ein Fahrzeugrad
Dispositif de roulement pour roue de véhicule

(30) Priority: 10.09.2002 JP 2002263969; 08.08.2003 JP 2003206697
(43) Date of publication of application: 17.03.2004
(73) Proprietor: NTN Corporation, Osaka (JP)
(72) Inventor: Fukushima, Shigeaki, Iwata-shi Shizuoka-Ken (JP); Noriaki, Ida, Iwata-shi Shizuoka-Ken (JP); Yamauchi, Kiyoshige, Iwata-shi Shizuoka-Ken (JP); Ozawa, Mashahiro, Iwata-shi Shizuoka-Ken (JP)
(74) Representative: Knott, Stephen Gilbert

(56) References cited:
- EP-A- 1 179 440
- EP-A- 1 314 905
- US-A1- 2001 016 520
- PATENT ABSTRACTS OF JAPAN vol. 2002, no. 08, 5 August 2002 (2002-08-05) & JP 2002 114004 A (KOYO SEIKO CO LTD), 16 April 2002 (2002-04-16)

## Description

### BACKGROUND OF THE INVENTION

### Field of the Invention

The present invention relates to a bearing apparatus for supporting a driving wheel of vehicle and more particularly to a bearing apparatus for a wheel of vehicle in which a hub wheel, a constant velocity universal joint and a double row rolling bearing are assembled as a unit.

### Description of Background Art

The driving wheels such as rear wheels of an FR (Front engine/Rear drive) vehicle, front wheels of an FF (Front engine/Front drive) vehicle and all wheels of a 4WD (4-wheel Drive) vehicle are supported by a suspension system via a bearing apparatus for a wheel. In recent years, it has a tendency to assemble the hub wheel, the constant velocity universal joint and the double row rolling bearing as a unit in order to reduce the weight and the size of the bearing apparatus for a wheel.

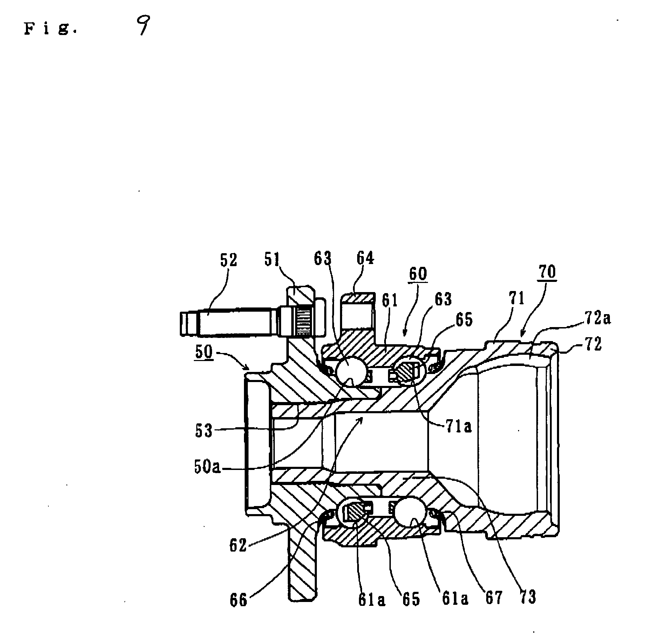

Fig. 9 is a longitudinal cross-section view of a bearing apparatus for a driving wheel of vehicle of the prior art in which a hub wheel 50, a double row rolling bearing 60 and a constant velocity universal joint 70 are assembled as a unit. The hub wheel 50 is formed integrally with a wheel mounting flange 51 for mounting a wheel (not shown) thereon and hub bolts 52 for securing the wheel are equidistantly arranged along the periphery of the flange 51.

The double row rolling bearing 60 comprises an outer member 61, an inner member 62 and double row rolling elements 63 and 63 and the outer member 61 has a flange 64 integrally formed therewith to be mounted on a body of vehicle (not shown) and double row outer raceway surfaces 61a and 61a formed on the inner surface thereof. In this case, the inner member 62 comprises the hub wheel 50 and an outer joint member 71. The inner member 62 is formed with double row inner raceway surfaces 50a and 71a arranged respectively opposite to the outer raceway surfaces 61a and 61a of the outer member 61. The inner raceway surface 50a is formed on the outer circumferential surface of the hub wheel 50 and the other raceway surface 71a is formed on the outer circumferential surface of the outer joint member 71 of the constant velocity universal joint 70. The double row rolling elements 63 and 63 are arranged between the outer raceway surfaces 61a and 61a and the inner raceway surfaces 50a and 71a and rotatably held therein by cages 65 and 65. Seals 66 and 67 are arranged at the ends of the double row rolling bearing 60 in order to prevent leak of grease contained within the bearing and also to prevent incoming of rain water or dusts.

The constant velocity universal joint 70 comprises the outer joint member 71, a joint inner ring, a cage and a torque transmission balls (not shown), The outer joint member 71 has a cup shaped mouth portion 72, a shaft portion 78 axially extending from the mouth portion 72, and axially extending curved track grooves 72a formed on the inner surface of the mouth portion 72.

The hub wheel 50 is formed with hardened irregular portion 53 on the inner circumferential surface thereof The hub wheel 50 and the outer joint member 71 are mutually connected by fitting the shaft portion 73 of the outer joint member 71 into the hub wheel 60 and then by radially outwardly expanding the fitting portion of the outer joint member 71 so that causing plastic deformation of the outer joint member 71 with making the hardened irregular portion 53 to bite into the outer circumferential surface at the fitting portion of the outer joint member 71 (see pages 4 and 5 and Fig.1 of Japanese Laid-Open Patent Publication No. 18605/2001, disclosing all features of the preamble of claim 1.

Such a structure of connection via the plastic deformation can prevent loosening and abrasion of the fitted portion and thus can improve the durability and the driving stability. In addition, since the connection via the plastic deformation has both functions of torque transmission and connection of the hub wheel and the outer joint member, it is possible to achieve reduction of the weight and size of the apparatus.

In such a bearing apparatus for a wheel, it is difficult to confirm the state of connection between the hub wheel 50 and the outer joint member 71 since the connection via plastic deformation is adopted therebetween, and thus, the confirmation of the strength and endurance of the connected portion is carried out by the breakdown test via sampling inspection. It is desired to further improve the quality and reliability of the connected portion since the defect of the quality will cause falling out of wheel which would cause a dangerous accident.

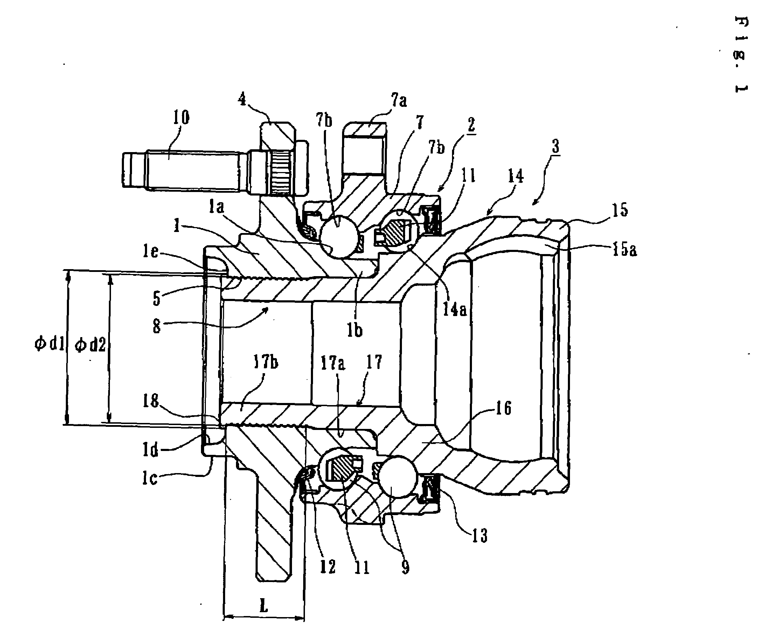

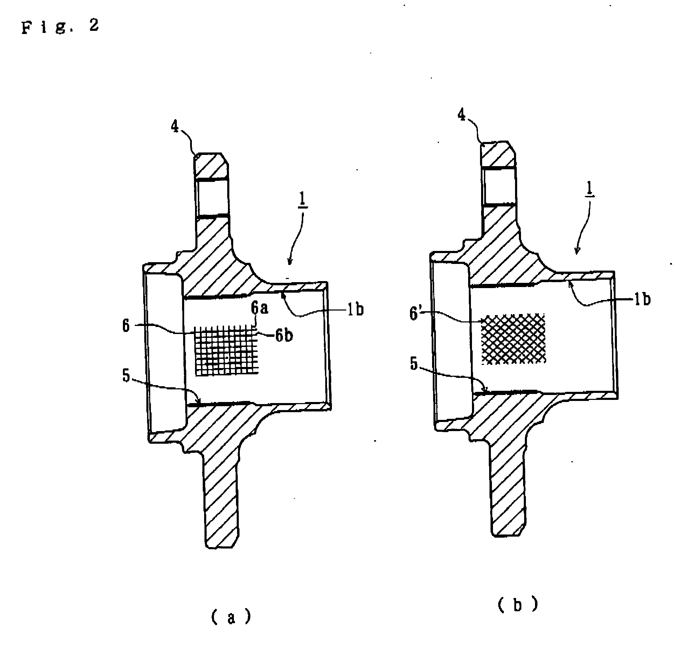

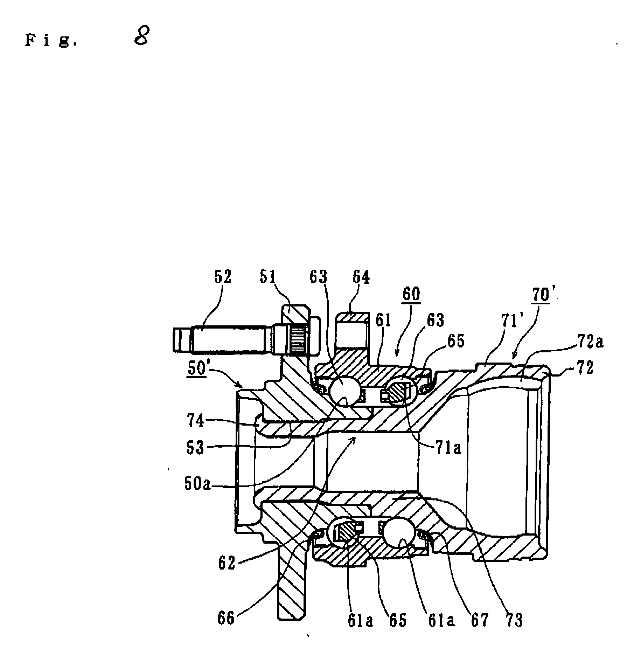

For solving this problem, the applicant has proposed a bearing apparatus for a wheel of vehicle shown in Fig. 8. In this bearing apparatus a hardened irregular portion 58 is formed on a radially outwardly arranged member (in this case the hub wheel 50') at the fitted portion of the hub wheel 50' and the outer joint member 71' : and the hub wheel 50' and the outer joint member 71' are integrally connected via plastic deformation of a radially inwardly arranged member (in this case the outer joint member 71') by radially outwardly expanding the radially inwardly arranged member so as to make the hardened irregular portion of the radially outwardly arranged member to bite into the surface of the radially inwardly arranged member and are axially secured via a caulked portion 74 formed by plastically deforming the end of the radially inwardly arranged member 71' (see pages 3 and 4, Fig. 1 and Fig. 2 of Japanese Laid-Open Patent Publication No. 89301/2003, published on 25.03.2003).
EP-A-1179444 discloses a bearing device for a drive wheel in which a hub wheel and an outer joint member are meshed with each other by way of serrations and coupled to each other by caulking.
US-A1-2001/016520 discloses a bearing device for a drive wheel in which a stem portion of an outer joint ring is inserted into a bore of a hub ring with making serrations between the parts. The two parts are also connected together by a bolt.

### SUMMARY OF THE INTENTION

However, such a bearing apparatus requires the caulking step or a retaining ring mount step in addition to the connecting step of the hub wheel 50' and the outer-joint member 71' via plastic deformation therebetween. In recent years, not only compactness and light weight of the bearing apparatus but improvement of quality and reliability thereof as well as low manufacturing cost are required in the art.
It is, therefore, an object of the present invention to provide a bearing apparatus for a driving wheel of vehicle of low manufacturing cost in which no loose is caused in the connected portion even if heavy moment is applied thereto and no pre-press puil-out is caused.
For achieving the object above, there is provided a bearing apparatus for a driving wheel of a vehicle, according to claim 1.
According to the bearing apparatus of claim 1, it is possible to provide a bearing apparatus for a wheel of vehicle of low manufacturing cost in which no loose is caused in the connected portion and durability can be maintained for a long term.
Preferred embodiments of the invention are defined in the dependent claims.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a longitudinal section view showing a first embodiment of the bearing apparatus for a wheel of the present invention;
Fig. 2 (a) is a longitudinal section view showing a crisscross pattern knurl formed by mutually crossed axial grooves and discontinuous annular grooves as an irregular portion, and Fig. 2 (b) is a longitudinal section view showing a crisscross pattern knurl formed by mutually inclined helical grooves as an irregular portion;
Fig. 3 (a) is a partially enlarged section view of the first embodiment of the bearing apparatus for a wheel of the present invention, and Fig. 3 (b) is a partially enlarged side elevation view of Fig. 3 (a).;
Fig. 4 is a longitudinal section view showing a second embodiment of the bearing apparatus for a wheel of the present invention;
Fig. 5 is a longitudinal section view showing a bearing apparatus for a wheel which is not in accordance with the present invention;
Fig. 6 is a longitudinal section view showing a third embodiment of the bearing apparatus for a wheel of the present invention;
Fig. 7 is a graph showing results of the pull-out test at the connected portion of the hub wheel and the outer joint member;
Fig. 8 is a longitudinal section view of the bearing apparatus for a wheel of the prior art; and
Fig. 9 is a longitudinal section view of another bearing apparatus for a wheel of the prior art.

### DESCRIPTION OF THE PREFERRED EMBODIMENTS

Fig. 1 shows a first embodiment of a bearing apparatus for a driving wheel of vehicle of the present invention. The apparatus comprises a hub wheel 1, a double row rolling bearing 2 and a constant velocity universal joint 3 which are assembled as a unit. In the description below, a term "outboard side" of the apparatus denotes a side which is positioned outside of the vehicle body and a term "inboard side" of the apparatus denotes a side which is positioned inside of the body when the apparatus is mounted on the vehicle body.
The hub wheel 1 is formed integrally with a wheel mounting flange 4 at the outboard side of the hub wheel 1 on which a wheel (not shown) is mounted and hub bolts 10 are equidistantly arranged on the flange 4 along its periphery. The inner circumferential surface of the hub wheel 1 is formed with a irregular portion 5 which are heat treated as having a hardened layer having a surface hardness of HRC 54~64. It is preferable to use as heat treatment a high frequency induction heating which can easily carry out a local heating and a setting of the depth of a hardened layer.

Fig. 2 shows example of the irregular portion 5 in which Fig 2 (a) shows an example of the irregular portion 5 of substantially orthogonally crossed grooves 6 comprising a plurality of discontinuous lathe turned annular grooves 6a and a plurality of broached axial grooves 6b and Fig.2 (b) shows an example of the irregular portion 5 comprising mutually inclined helical grooves 6' of crisscross pattern. It is preferable to form the irregular portion 5 by pointed projections such as pyramids to assure a good biting performance.

The double row rolling bearing 2 comprises an outer member 7, inner member 8 and a double row rolling elements 9 and 9. The outer member 7 is integrally formed on its outer circumferential surface with a body mounting flange 7a and on its inner circumferential surface with double row outer raceway surfaces 7b and 7b. On the other hand, the inner member 8 comprises the hub wheel 1 and an outer joint member 14 hereinafter described and inner raceway surfaces 1a and 14a opposed to the outer raceway surfaces 7b and 7b are arranged on the outer circumferential surfaces of the hub wheel 1 and the outer joint member 14 respectively. The double row rolling elements 9 and 9 are contained between the outer raceway surfaces 7 b and 7b and the inner raceway surfaces 1a and 14a and freely rotatably held therein by cages 11 and 11. Seals 12 and 13 are arranged at the ends of the bearing 2 to prevent leak of grease contained within the bearing 2 as well as ingress of rain water or dusts. A hardened layer is formed for example by induction hardening at regions around the outer circumferential surface of the hub wheel 1 such as a seal land portion to which the seal 12 slidably contacts, the inner raceway surface 1a, and a surface of spigot portion 1b to which the shoulder 16 of the outer joint member 14 abuts. The illustrated ball rolling elements 9 and 9 may be replaced for example by conical rolling elements.

In such a kind of bearing apparatus, a larger moment is applied to the rolling bearing of the inboard side of the double row rolling bearing than that of the outboard side. According to the preferable embodiment of the present invention, the pitch circle diameter (PCD) of the rolling elements 9 of the inboard side is set somewhat larger than that of the rolling elements 9 of the outboard side in order to increase the load supporting capacity of the rolling bearing of the inboard side. It is also possible to increase the load supporting capacity by changing the number or size of the rolling elements 9 of the inboard aide.

The constant velocity universal joint 3 comprises the outer joint member 14, the joint inner ring (not shown), the cage, and the torque transmitting balls. The outer joint member 14 comprises a cup-shaped mouth portion 15, a shoulder 16 forming the bottom of the mouth portion 15, a shaft portion 17 axially extending from the shoulder 16, and an axially extending curved track groove 15a formed on the inner surface of the mouth portion.

The inner raceway surface 14a is formed around the outer circumferential surface of the shoulder 16 of the hollow outer joint member 14. The shaft portion 17 have a stepped portion of small diameter 17a onto which the spigot portion 1b of the hub wheel 1 is press fitted and a fitting portion 17b onto which the hub wheel 1 is fitted. The fitting portion 17b is fitted into the hub wheel 1 with tho end surface of the spigot portion 1b of the hub wheel 1 being abutted against the shoulder 16 of the outer joint member 14. Then the hub wheel 1 and the outer joint member 14 are integrally connected via plastic deformation of the fitting portion 17b of the outer joint member 14 with making the hardened irregular portion 6 of the hub wheel 1 to bite into the outer circumferential surface at the fitting portion of the outer joint member 14 by radially outwardly expanding the fitting portion of the outer joint member 14. Since the fitted portion via plastic deformation has both a torque transmitting function and a jointing function of the hub wheel 1 and the outer joint member 14, any provision of torque transmitting means such as a conventional serration means on the hub wheel 1 and the outer joint member 14 as well as axially securing means is not required and accordingly it is possible to realize further reduction of the weight and size of the apparatus,

The outer joint member 14 is formed with a hardened layer at the track groove 15a formed on the inner surface of the mouth portion 115, and a region from the seal land portion on which the seal slidably contacts to the stepped portion of small diameter 17a of the shaft portion 17 through the inner raceway surface 14a. It is preferable to carry out the heat treatment by the high frequency induction heating. It is also preferable to keep the fitting portion 17b as no-quenched portion having surface hardness less than HRC 24 and to set the surface hardness of the irregular portion 5 of the hub wheel 1 at about HRC 54~64 to hold a difference in the hardness between the irregular portion 5 and the fitting portion 17b larger than HRC 30. This enable the irregular portion 5 to easily bite into the fitting portion 17b without causing deformation of the irregular portion 5 to tightly combine them via the plastic deformation. Although not illustrated, an end cap is usually arranged at an end of the outer joint member 14 in order to prevent leakage of grease contained within the mouth portion 15 and ingress of dusts from the outside.

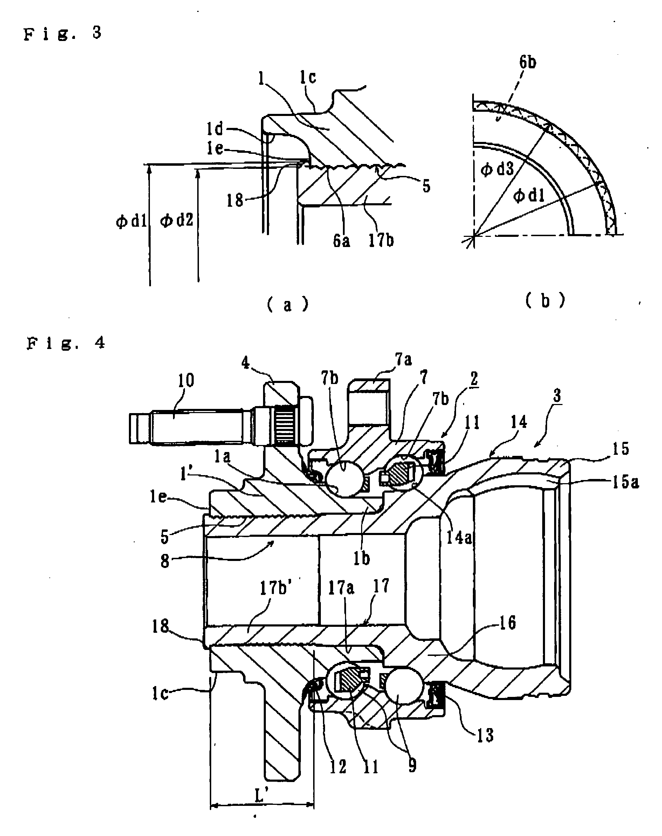

The region in which the irregular portion 5 is formed is set at an area from the wheel pilot portion 1c to a position near a line of action (i.e. an extension of a line connecting a contact point between the rolling element 9 and the inner raceway surface and the center of the rolling element 9). As shown in Fig. 3 (a), a counterbore 1d is formed on the radially inner surface of the pilot portion 1c so that the fitting portion 17b is projected from the outer end surface 1e of the hub wheel 1. This is intended to be formed a radially expanded end portion 18 after expanding of the fitting portion 17b. The outer diameter φ d1 of the radially expanded end portion 18 is larger than the bottom diameter φ d2 of the annular grooves 6a or the bottom diameter φ d3 of the axial grooves 6b of the irregular portion 5. Thus the radially expanded portion 18 can increase the axial pull-out proof force at the connected portion between the hub wheel 1 and the outer joint member 14. It is preferable to set the outer diameter φ d1 1.01~1.15 times the bottom diameters φ d2 and φ d3 of the annular grooves 6a and the axial grooves 6b respectively.

Fig. 4 is a longitudinal view showing a second embodiment of the bearing apparatus for a wheel of the present invention. This embodiment differs from the first embodiment only in that the counterbore is not formed in the pilot portion of the hub wheel and thus same reference numerals are used for designating same parts.

In the bearing apparatus of this embodiment, a hub wheel 1', the double row rolling bearing 2 and the constant velocity universal joint 3 are assembled as a unit. The wheel pilot portion 1c of the hub wheel 1' is not formed with any counterbore and thus the radially inner surface of the pilot portion 1c is extended longer than that in the first embodiment. Accordingly the length of the fitting portion 17b' of the shaft portion 17 of the outer joint member 14 is also extended. The outer end 18 of the fitting portion 17b' is positioned slightly beyond the outer end surface 1e e of the hub wheel 1'. In this embodiment, the length L' of caulking portion of the fitting portion 17b' is longer than that L in the first embodiment (L'<L) and thus higher pull-out proof force can be obtained as compared with the first embodiment.

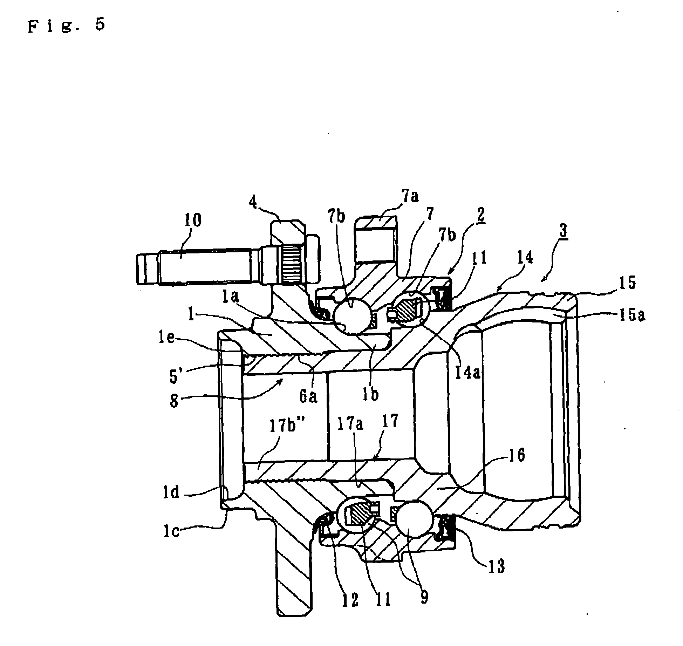

Fig. 5 is a longitudinal view showing a bearing apparatus for a wheel which is not in accordance with the present invention. This apparatus differs from the aforementioned embodiments only in the structure of the connected portion between the hub wheel and the outer joint member and thus same reference numerals are used for designating same parts.
The radially inner surface of the hub wheel 1 is formed with the hardened irregular portion 5', The hub wheel 1 and the outer joint member 14 are integrally connected via plastic deformation by making the hardened irregular portion 5' of the hub wheel 1 to bite into the fitting portion 17b" of the shaft portion 17 the outer joint member 14. The region in which the irregular portion 5' is formed is set at an area from the wheel pilot portion 1c to a position near a line of action of the rolling element 9. The counterbore 1d is formed on the end surface of the outboard side of the hub wheel 1.
The length of the fitting portion 17b" is determined so that the end surface of the fitting portion 17b" substantially corresponds to the outer end surface 1e of the hub wheel 1. As to the irregular portion 5', substantially orthogonally crossed grooves 6 are formed by a plurality of discontinuous lathe turned annular grooves 6a and a plurality of broached axial grooves (not shown). The depths of the annular grooves and the axial grooves are substantially same. The number, size are appropriately determined so as to enable the hardened projections (each having a pyramid configuration) of the irregular portion 5' to bite into the fitting portion 17b", In addition, the radially inner diameter of the irregular portion 5' of the hub wheel 1, the radially inner diameter of the fitting portion 17b" and the radially outer diameter of the expanding tool such as a mandrel are determined so that the irregular portion 5' can effectively bite into the material of the fitting portion 17".

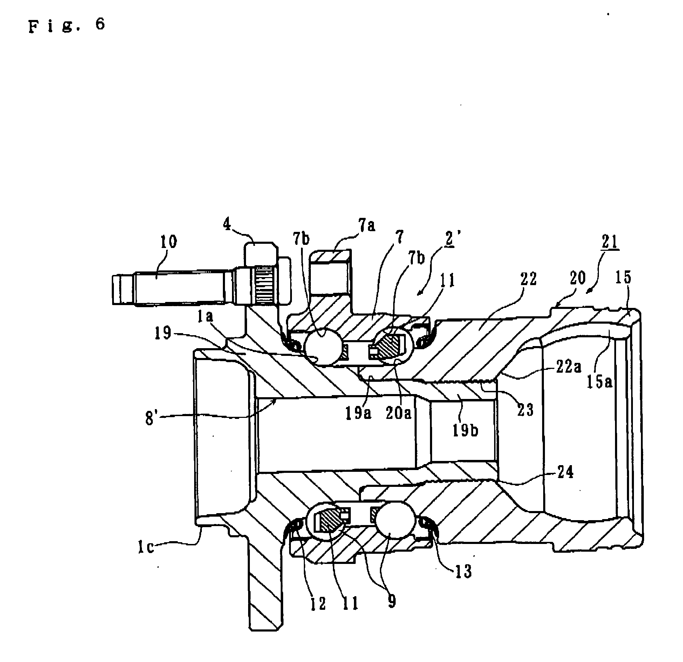

Fig. 6 is a longitudinal view showing a third embodiment of the bearing apparatus for a wheel of the present invention. In the bearing apparatus of this embodiment, a hub wheel 19, a double row rolling bearing 2' and a constant velocity universal joint 21 are assembled as a unit. Same reference numerals are used for designating same parts.
The hub wheel 19 is formed integrally with a wheel mounting flange 4 for mounting a wheel (not shown) thereon and hub bolts 10 for securing the wheel are equidistantly arranged along the periphery of the flange 4. The inner raceway surface 1a of the outboard side is formed on the outer circumferential surface of the hub wheel 1 and the stepped portion of smaller diameter 19a and the fitting portion 19b are extended from the inner raceway surface 1a.
The double row rolling bearing 2' comprises an outer member 7, an inner member 8' and double row rolling elements 9 and 9. The outer member 8 has a flange 7a integrally formed therewith to be mounted on a body of vehicle (not shown) and double row outer raceway surfaces 7b and 7b formed on the inner surface thereof. In this case, the inner member 8' comprises the hub wheel 19 and an outer joint member 20. The inner raceway surface 1a of outboard side and the inner raceway surface 20a of the inboard side respectively corresponding to the outer raceway surfaces 7b and 7b of the outer member 7 are formed on the outer circumferential surfaces of the hub wheel 1 and the outer joint member 20 respectively The double row rolling elements 9 and 9 are arranged between the outer raceway surfaces 7b and 7b and the inner raceway surfaces 1a and 20a and rotatably held therein by cages 11 and 11. Seals 12 and 13 are arranged at the ends of the double row rolling bearing 2' in order to prevent leak of grease contained within the bearing and also to prevent incoming of rain water or dusts.

The hub wheel 19 is formed with a hardened layer at the seal land portion on which the seal lip of the seal 12 slides, the inner raceway surface 1a and the stepped portion of small diameter 19a which are heat treated by the high frequency induction heating. The fitting portion 19b to be radially enlarged is remained as no heat treated portion having a surface hardness less than HRC 24 after forging.

The outer joint member 20 of the constant velocity universal joint 21 is made of medium carbon steel such as S53C and has the cup-shaped mouth portion 15 and the shoulder 22 forming the bottom of the mouth portion 15. The inner raceway surface 20a of the inboard side is directly formed on the outer circumferential surface of the hollow shoulder portion 22. An irregular portion 23 is formed on the inner circumferential surface of the shoulder 22 and is heat treated as having a surfaces hardness of HRC 54~64. It is preferable to use the high frequency induction heating which can easily carry out the setting of the depth of hardened layer. It is also possible to have a hardened layer throughout the surface thereof by carburized hardening case-hardened steel such as SCr420.
The shoulder 22 of the outer joint member 20 is fitted onto the fitting portion 19b of the hub wheel 19 with the shoulder 22 press fitted onto the stepped portion of smaller diameter 19a of the hub wheel 19 being abutted against the hub wheel 19. Then the hub wheel 19 and the outer joint member 20 are integrally connected via plastic deformation of the fitting portion 19b with making the hardened irregular portion 23 of the shoulder 22 to bite into the outer circumferential surface of the fitting portion 19b. Similarly to the first and second embodiments, since the projected end 24 can be radially outwardly expanded without any constraint to its diameter exceeding the bottom diameter of the axial grooves forming the irregular portion 23, it is possible to increase the pull-out proof force at the connected portion between the hub wheel 19 and the outer joint member 20.
It is shown, according to the pull-out test of the connected portion carried out by the applicant, that the connecting manner of plastic deformation of the fitting portion of the shaft portion by the irregular portion of the hub wheel (hereinafter referred to "enlarged caulking") exhibits higher pull-out proof force than the conventional connecting manner of forming the caulked portion by radially outward plastic deformation of the end portion of the shaft of the outer joint member (hereinafter referred to "swing caulking"). In addition, according to the endurance test simultaneously carried out, it is shown that the reduction of the axial force is caused by generation of the reduction of the predetermined pre-press amount of the double row rolling bearing when the connecting force is low, if the predetermined moment load is applied to the bearing apparatus. The reduction of the axial force would cause the breakage of the connected portion. Accordingly, it is important to study the relation between the pull-out proof force of the connected portion and the durability of the bearing apparatus.

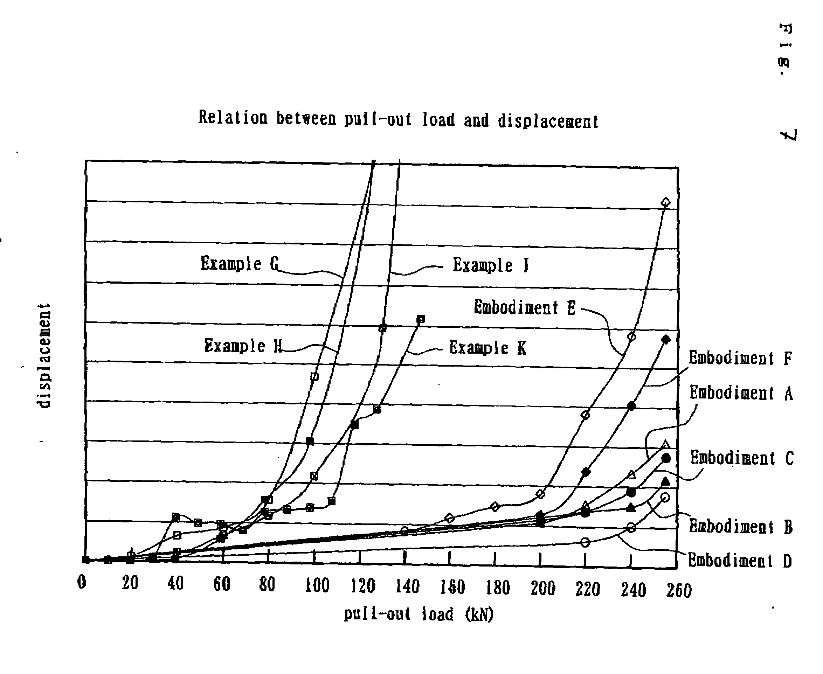

The applicant carried out the pull-out test of the connected portion based upon several samples made by the conventional swing caulking manner and the enlarged caulking manner. Fig. 7 shows the results of the pull-out test. It is found that there is a point (i.e. starting point of slippage of the connected portion) at which the displacement in the connected portion is suddenly caused during gradually increasing the pull-out load for axially separating the connected portion between the hub wheel and the outer joint member. That is, the slippage starting point induces the pre-press pull-out and thus causes the reduction of the axial force. It is furthermore found that the pull-out proof force gives dominant influence to the durability of the bearing apparatus.

In Fig. 7, Embodiments B and C denote the first embodiment (Fig. 1), Embodiment A denotes the fourth embodiment (Fig. 6). Embodiment D denotes the second embodiment (Fig. 4), and Embodiment F denotes the third embodiment (Fig. 5). On the other hand, Examples G, H, J and K denotes the results of tests as to the structures using conventional swing caulking manner.

As can be seen from these results, the enlarged caulking manner exhibits the pull-out proof force more than 2 times that according to the conventional swing caulking manner and a smaller displacement in the connected portion as well as higher rigidity as compared with the conventional structure. In the conventional swing caulking manner, although small displacement can be maintained below pull-out load of about 80 kN, the slippage is suddenly caused beyond this point and thus the generation of the pre-press pull-out of the bearing portion is supposed. On the contrary, according to the enlarged caulking manner, little displacement is caused in the connected portion below pull-out load of about 200kN and sufficient rigidity can be obtained. In addition, sufficient rigidity can be obtained and no slippage is caused beyond 160 kN even though the connected portion is made in accordance with the conventional enlarged caulking manner, by optimally setting the specifications of the annular and axial grooves forming the irregular portion.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims.

## Claims

1. A bearing apparatus for a driving wheel of vehicle wherein a hub wheel (1,1',19), a constant velocity universal joint (14,21) and a double row rolling bearing (2,2') are assembled as a unit: the hub wheel and an outer joint member (17,22) of a constant velocity universal joint (14,21) are fitted each other; and a connected portion of the hub wheel and the outer joint member has a plastic deformed connection means, wherein one of the inner raceway surfaces (1a) of the double row rolling bearing (2,2') is formed on the hub wheel (1,1',19) and the other of the double row inner raceway surfaces (14a,20a) is formed on the outer joint member (17,22); a hardened irregular portion (5,5',23) is formed on a radially outwardly arranged member at the fitted portion of the hub wheel and the outer joint member; and the hub wheel and the outer joint member are integrally connected via plastic deformation of a radially inwardly arranged member by radially outwardly expanding the radially inwardly arranged member so as to make the hardened irregular portion (5,5',23) of the radially outwardly arranged member to bite into the surface of the radially inwardly arranged member, wherein the portion to be radially outwardly expanded is projected beyond the hardened irregular portion, **characterised by** the plastic deformation connection means having an axial pull-out proof force more than 160 kN, and wherein the hardened irregular portion (5,5',23) is formed by substantially orthogonally crossed grooves comprising plurality of axial grooves (6b) and annular grooves (6a); and the outer diameter of the portion (18,24) projected beyond the hardened irregular portion is larger than the bottom diameter of the annular grooves or the axial grooves,

2. A bearing apparatus for a driving wheel of vehicle of claim 1 wherein the outer joint member (17,22) of the constant velocity universal joint (14,21) is fitted into the hub wheel (1,1',19).

3. A bearing apparatus for a driving wheel of vehicle of claim 1 wherein the outer joint member (17,22) of the constant velocity universal joint (14,21) is fitted onto the hub wheel (1, 1', 19).

## Patentansprüche

1. Lagervorrichtung für ein Antriebsrad eines Fahrzeugs, bei der ein Nabenrad (1, 1', 19) ein Gleichlaufgelenk (14, 21) und ein Doppelreihen-Kugellager (2, 2') zu einer Einheit zusammengesetzt sind; das Nabenrad und ein äußeres Gelenkelement (17, 22) eines Gleichlaufgelenkes (14, 21) ineinandergefügt sind und ein Verbindungsabschnitt des Nabenrades sowie das äußere Gelenkelement eine plastisch verformte Verbindungseinrichtung haben, wobei eine der inneren Laufflächen (1a) des Doppelreihen-Kugellagers (2, 2') am Nabenrad (1, 1', 19) ausgebildet ist und die andere der inneren Laufflächen (14a, 20a) des Doppelreihen-Kugellagers am äußeren Gelenkelement (17, 22) ausgebildet ist, ein gehärteter ungleichförmiger Abschnitt (5, 5', 23) auf einem radial außen angeordneten Element an dem Einpassabschnitt des Nabenrades und des äußeren Gelenkelementes ausgebildet ist und das Nabenrad sowie das äußere Gelenkelement über eine plastische Verformung eines radial innen angeordneten Elementes durch radial nach außen gerichtetes Erweitern des radial innen angeordneten Elementes integral derart miteinander verbunden sind, dass der gehärtete ungleichförmige Abschnitt (5, 5', 23) des radial außen angeordneten Elementes in die Oberfläche des radial innen angeordneten Elementes beißt, wobei der Abschnitt, der radial nach außen erweitert werden soll, über den gehärteten ungleichförmigen Abschnitt hinausragt, **dadurch gekennzeichnet, dass** die plastisch verformte Verbindungseinrichtung einer axialen Abziehkraft von mehr als 160 kN widersteht, wobei der gehärtete ungleichförmige Abschnitt (5, 5', 23) durch im wesentlichen orthogonal gekreuzte Rillen ausgebildet ist, die eine Vielzahl axialer Rillen (6b) und ringförmiger Rillen (6a) enthalten und der Außendurchmesser des Abschnittes (18, 24), der über den gehärteten ungleichförmigen Abschnitt hinausragt, größer ist als der Grunddurchmesser der ringförmigen Rillen oder der axialen Rillen.

2. Lagervorrichtung für ein Antriebsrad eines Fahrzeugs nach Anspruch 1, bei der das äußere Gelenkelement (17, 22) des Gleichlaufgelenkes (14, 21) in das Nabenrad (1, 1', 19) eingefügt ist.

3. Lagervorrichtung für ein Antriebsrad eines Fahrzeugs nach Anspruch 1, bei der das äußere Gelenkelement (17, 22) des Gleichlaufgelenkes (14, 21) auf das Nabenrad (1, 1', 19) gesteckt ist.

## Revendications

1. Dispositif de roulement pour une roue motrice de véhicule dans lequel une roue à moyeu (1, 1', 19), un joint universel à vitesse constante (14, 21) et un roulement à deux rangées (2, 2') sont assemblés sous la forme d'une unité : la roue à moyeu et un élément de joint externe (17, 22) d'un joint universel à vitesse constante (14, 21) sont ajustés l'un par rapport à l'autre ; et une partie raccordée de la roue à moyeu et de l'élément de joint externe a des moyens de raccordement plastiques déformés, dans lequel l'une des surfaces de chemin de roulement internes (1a) du roulement à deux rangées (2, 2') est formée sur la roue à moyeu (1, 1', 19) et l'autre surface des surfaces de chemin de roulement internes à deux rangées (14a, 20a) est formée sur l'élément de joint externe (17, 22) ; une partie irrégulière durcie (5, 5', 23) est formée sur un élément agencé radialement vers l'extérieur au niveau de la partie ajustée de la roue à moyeu et de l'élément de joint externe ; et la roue à moyeu et l'élément de joint externe sont raccordés de manière solidaire via la déformation plastique d'un élément agencé radialement vers l'intérieur par l'expansion radialement vers l'extérieur de l'élément agencé radialement vers l'inférieur afin de permettre à la partie irrégulière durcie (5, 5', 23) de l'élément agencé radialement vers l'extérieur de mordre dans la surface de l'élément agencé radialement vers l'intérieur, dans lequel la partie à expanser radialement vers l'extérieur fait saillie au-delà de la partie irrégulière durcie, **caractérisé par** les moyens de raccordement de déformation plastique ayant une force à l'épreuve de la traction axiale supérieure à 160 kN, et dans lequel la partie irrégulière durcie (5, 5', 23) est formée par des rainures croisées de manière sensiblement orthogonale comprenant une pluralité de rainures axiales (6b) et de rainures annulaires (6a) ; et l'autre diamètre de la partie (18, 24) en saillie au-delà de la partie irrégulière durcie est supérieur au diamètre inférieur des rainures annulaires ou des rainures axiales.

2. Dispositif de roulement pour une roue motrice de véhicule selon la revendication 1, dans lequel l'élément de joint externe (17, 22) du joint universel à vitesse constante (14, 21) est ajusté dans la roue à moyeu (1, 1', 19).

3. Dispositif de roulement pour une roue motrice de véhicule selon la revendication 1, dans lequel l'élément de joint externe (17, 22) du joint universel à vitesse constante (14, 21) est ajusté sur la roue moyeu (1, 1', 19).
